# EUROPÄISCHE PATENTSCHRIFT

(11) **EP 2 159 037 B1**
(45) Veröffentlichungstag und Bekanntmachung des Hinweises auf die Patenterteilung: **13.04.2011**
(21) Anmeldenummer: 08015157.4
(22) Anmeldetag: 28.08.2008
(51) Int. Cl.: B29C 65/16, F16L 47/02, B23K 26/06

(54) **Verbindungs- oder Abzweigelement zum Verbinden mit einem Rohrendabschnitt im Laserdurchstrahlverfahren sowie Laserkopf und Verfahren zum Verbinden**
Connection or branching element for connecting with a tube end section using the laser radiation method and laser head and connection method
Elément de raccordement ou de séparation destiné au raccordement à une section de tuyau par le procédé de rayonnement laser ainsi que tête laser et procédé de raccordement

(43) Veröffentlichungstag der Anmeldung: 03.03.2010
(73) Patentinhaber: Leister Process Technologies, 6056 Kägiswil (CH)
(72) Erfinder: Stauffer, Erich, 6003 Luzern (CH); Barmet, Pius, 6048 Horw (CH); Hinz, Oliver, 6072 Sachseln (CH); Scheidt, Michael, 8623 Wetzikon (CH); Gubler, Ulrich, 6006 Luzern (CH)
(74) Vertreter: Klocke, Peter

(56) Entgegenhaltungen:
- WO-A-97/21953
- WO-A-2005/097471
- WO-A-2005/113049
- JP-A- 1 151 464
- JP-A- 4 191 592
- JP-A- 55 021 232
- JP-A- 2004 114 456
- JP-A- 2005 193 614
- JP-A- 2007 260 957
- JP-A- 2008 001 022
- US-A- 4 629 216

## Beschreibung

Die Erfindung betrifft einen Laserkopf zum Verbinden von rohrförmigen Teilen im Laserdurchstrahlschweißverfahren sowie ein Verfahren zum Verbinden eines Verbindungs- oder Abzweigelementes mit Enden eines Kunststoffrohres nach der Laserdurchstrahlschweißmethode.

Es ist bekannt, stirnseitig aneinanderstoßende oder endseitig überlappende rohrförmige Teile aus thermoplastischem Kunststoff im Laserdurchstrahlschweißverfahren simultan zu verschweißen. Das simultane Verschweißen kann mit einer einzigen Laserlichtquelle quasisimultan oder einer Anzahl von Laserlichtquellen vollkommen simultan erfolgen. Bei dem nahezu simultanen Laserschweißverfahren ist die Verbindungsstelle der Werkstücke von einer ringförmigen Strahlumlenkeinrichtung umgeben, die mittels einem von der Laserlichtquelle ausgehenden Laserstrahl fortlaufend kreisförmig abgescannt wird und die den Laserstrahl rechtwinkelig zu der Verbindungsstelle hin umlenkt. Bei der vollständig simultanen Laserschweißmethode sind die Laserlichtquellen kreisförmig um die Verbindungsstelle der Werkstücke angeordnet, wobei sich die Laserstrahlen an der Verbindungsstelle überlappen.

Zum Simultanschweißen mittels mehrerer Laserlichtquellen wird beispielhaft auf die Offenlegungsschrift DE 10 2004 003 696 A1 verwiesen. Die Schrift offenbart eine Vorrichtung zum simultanen Schweißen von Werkstücken, umfassend eine Anzahl von Laserlichtquellen, wobei die Laserlichtquellen in einem Gehäuse derart angeordnet sind, dass von den Laserlichtquellen ausgesandte Laserstrahlen mindestens einen radial weiter innen liegenden Bereich mit einer abschnittsweise im Wesentlichen konstanten Energiedichte erzeugen, in den die Werkstücke einbringbar sind. Das Einbringen und das Spannen der Werkstücke im Zentrum der Laserlichtquellen hat sich insbesondere bei langen Werkstücken als schwierig erwiesen.

Zum Verschweißen von sich stirnseitig stoßenden oder überlappenden rohrförmigen Teilen aus thermoplastischem Kunststoffmaterial wird beispielhaft auf die Druckschriften JP 2007-260 957 A, JP 2005-193 614 A, JP 2004-114 456 A, WO 97/21 953 A, JP 55-021 232 A, JP 04-191 592 A, US 4,629,216 A, JP 2008-001 022 A, WO 2005/113 049 A, WO 2005/097 471 A und JP 01-151 464 A verwiesen.

Die Schriften JP 2007-260 957, JP 2005-193 614, JP 2004-114 456, WO 2005/113 049, WO 2005/097 471 und JP 01-151 464 offenbaren verschiedene Möglichkeiten von Schweißverbindungen nach dem Laserdurchstrahlverfahren, bei denen hohlzylinderförmige Teile aus thermoplastischem Kunststoffmaterial an überlappenden Enden dichtend miteinander verbunden werden. Die Druckschrift JP 2008-001 022 schlägt eine Möglichkeit zum Verbinden sich stirnseitig stoßender thermoplastischer Kunststoffrohre mit einem Laserstrahl vor. Die Schriften JP 55-021 232, JP 04-191 592 und US 4,629,216 offenbaren elektrisch beheizbare Schweißmuffen zum übergreifenden Verbinden von rohrförmigen Kunststoffteilen. Die Druckschrift WO 97/21 953 lehrt die Verbindung von Rohrenden mit einer mit O-Ringen versehenen Muffe, die mittels einer Bindesubstanz befestigt wird.

Ausgehend von dem vorstehend beschriebenen Stand der Technik liegt der Erfindung die Aufgabe zugrunde, eine Möglichkeit zum Verbinden eines Rohrendabschnittes mit einem Verbindungsabschnitt eines Verbindungs- oder Abzweigelementes aufzuzeigen, welche sich durch wesentlich verkürzte Schweißzeiten bei einer betriebssicheren flüssigkeits- oder gasdichten Schweißverbindung auszeichnet, wobei besonders Wert gelegt wird auf eine einwandfreie Verschweißung zwischen der äußeren Rohrumfangsfläche und dem zugeordneten inneren Umfang des Verbindungs- bzw. Abzweigelementes.

Diese Aufgabe wird erfindungsgemäß durch einen Laserkopf mit den Merkmalen des Anspruchs 1 sowie durch ein Verbindungsverfahren mit den Merkmalen des nebengeordneten Anspruchs 6 gelöst. Weitere vorteilhafte Ausgestaltungen sind den rückbezogenen Ansprüchen zu entnehmen.

Der erfindungsgemäße Laserkopf zum Verbinden von rohrförmigen Teilen im Laserdurchstrahlschweißverfahren ermöglicht eine simultane Verschweißung der rohrförmigen Teile miteinander. Dabei können die rohrförmigen Teile stumpf oder überlappend miteinander verschweißt werden. Für eine nicht überlappende Verschweißung weisen die zu verbindenden rohrförmigen Teile an den Endabschnitten eine identische Querschnittsform auf, während sie für eine überlappende Verschweißung eine konturengleiche Querschnittsform aufweisen, die derart ausgebildet ist, dass eines der rohrförmigen Teile mit seinem Endabschnitt stirnseitig in den Endabschnitt des anderen rohrförmigen Teiles unter Ausbildung eines Gleitsitzes oder eines leichten Presssitzes einführbar ist. Dazu kann ein Verbindungselement in Form einer Verbindungsmuffe an einem Endabschnitt eines der rohrförmigen Teile angeformt sein, oder ein auf das rohrförmige Teil abgestimmtes Verbindungs- oder Abzweigelement auf das rohrförmige Teil aufgeschoben und nach der Laserdurchstrahlschweißmethode mit diesem verbunden sein oder verbunden werden.

Um die simultane Verschweißung einfach zu ermöglichen, umschließt der erfindungsgemäße Laserkopf einen Verbindungsabschnitt und/oder einen Verbindungsbereich der Teile vorzugsweise vollständig, wobei der Laserkopf mindestens zwei radial voneinander trennbare Schalenteile aufweist, in denen eine Anzahl von Laserquellen derart angeordnet sind, dass sich die von den Laserquellen ausgehenden Laserstrahlen an dem Verbindungsabschnitt bzw. dem Verbindungsbereich überlappen. Bevorzugt werden Ausführungsformen der Erfindung, bei der die Überlappung am Verbindungsbereich bzw. -abschnitt in Umfangsrichtung der zu verbindenden Teile lückenlos ist und/oder der Laserkopf zwei Halbschalen aufweist.

Durch die senkrecht zu der Längsrichtung der zu verbindenden rohrförmigen Teile trennbaren Schalenteile kann der teilbare Laserkopf unabhängig von der Rohrlänge der zu verbindenden Teile um die Schweißstelle gelegt und damit der Verbindungsbereich der zu verbindenden Teile in einem Aufnahmeraum des Laserkopfes aufgenommen werden, der idealerweise im Zentrum des Laserkopfes angeordnet ist. Die von den Schalenteilen ausgehenden Laserstrahlen können durch jeweils integrierte Optiken derart geformt, gelenkt und fokussiert werden, dass sich die Laserstrahlen aus den einzelnen Laserquellen an der herzustellenden Schweißnaht überlappen. Damit wird eine homogene Leistungsverteilung des Laserlichts über den gesamten Umfang der Schweißnaht sicher gestellt. Als Laserquellen können entweder integrierte Lasereinzelquellen oder integrierte Laserbarren verwendet werden oder auch in Stücke von Lichtleitern abgesetzter Laserquellen.

Bei einer Variante der Erfindung ist der Durchmesser des Aufnahmeraums derart ausgebildet oder der Aufnahmeraum derart mit Einrichtungen versehen, dass die Schalenteile die zu verbindenden Teile im Verbindungsbereich radial pressen, so dass auch rohrförmige Teile ohne Presssitz, beispielsweise mit einem Gleitsitz problemlos miteinander am Umfang verbunden werden können.

Natürlich können mit dem teilbaren Laserkopf auch rohrförmige Teile durch Laserschweißen miteinander verbunden werden, bei denen bereits ein Presssitz an den axial überlappenden Endabschnitten vorliegt. Bevorzugt sind dazu die Laserstrahlen auf ein an einem der zu verschweißenden Teile angeformtes Brückungselement gerichtet, das einen radialen Ringspalt zwischen den sich überlappenden Endabschnitten der rohrförmigen Teile überbrückt. Das Brückungselement, das den Presssitz herbeiführt, kann im einfachsten Fall beispielsweise ein am Innenumfang des übergreifenden Endabschnittes vorstehend vorgesehener umlaufender in radialer Richtung niedriger Ringbund sein.

Prinzipiell kann an die Stelle eines der rohrförmigen Teile auch ein Verbindungs- oder Abzweigelement zum Verbinden mit dem Ende des anderen rohrförmigen Teiles treten, wobei das Verbindungselement oder Abzweigelement einen hohlzylindrischen Verbindungsabschnitt zur Aufnahme und vorzugsweise zur dichtenden Befestigung des einschiebbaren Rohrendes des anderen rohrförmigen Teils ein solches Brückungselement aufweist. Der Ringbund ermöglicht trotz Presspassung ein einfaches axiales Einführen des Rohrendes in das Verbindungs- bzw. Abzweigelement. Der Presssitz zwischen dem Verbindungs- oder Abzweigelementes ist für eine sichere Verschweißung des Außenumfang des Rohrendabschnittes mit dem Ringbund ausreichend. Das Brückungselement überbrückt partiell einen zwischen einem Rohrendabschnitt eines eingeschobenen Rohres und einem Verbindungsabschnitt des Verbindungs- oder Abzweigelements gebildeten Ringspalt.

Dabei weist der Rohrendabschnitt idealerweise einen Außendurchmesser auf, der nur geringfügig größer ist als der Innendurchmesser des Ringbundes. Das Einführen des Rohrendes in das Verbindungs- bzw. Abzweigelement mit dem in dem Verbindungsabschnitt angeordneten Ringbundes kann durch eine mehr oder weniger lange Fase an der Stirnseite des Rohres vereinfacht werden. Beim Einschieben des Rohres in den Verbindungsabschnitt erfolgt vorzugsweise eine geringfügige Verformung oder Verpressung des Ringbundes, was einem Presssitz zwischen dem Rohrendabschnitt und dem Brückungselement bewirkt. Abhängig davon, wie die Wandstärke des zu verbindenden Rohres gegenüber der Wandstärke des Verbindungsabschnittes im Bereich des Ringbundes ausgebildet ist, kann es dabei auch zu einer radialen Verformung des Rohrendabschnittes und/oder des Verbindungsabschnittes kommen.

Nach dem erfindungsgemäßen Verfahren zum Verbinden des eines Verbindungs- oder Abzweigelementes mit einem Ende eines aus thermoplastischen Kunststoff bestehenden Rohres nach der Laserdurchstrahlschweißmethode, sind die nachfolgenden Verfahrensschritte vorgesehen. Dabei weist das Verbindungs- oder Abzweigelement einen hohlzylinderförmigen Verbindungsabschnitt zur Aufnahme und zur dichtenden Befestigung des einschiebbaren Rohrendes auf, wobei der Rohrendabschnitt unter Bildung eines Presssitzes in den Verbindungsabschnitt einführbar ist und mittels einem Laserkopf, beispielsweise dem vorstehend beschriebenen Laserkopf simultan verschweißt wird.

Zunächst wird ein Rohr mit einem Rohrendabschnitt sowie ein Verbindungs- oder Abzweigelement bereitgestellt, dessen Verbindungsabschnitt an dem Innenumfang ein angeformtes umlaufendes Brückungselement zum partiellen Überbrücken des Ringspaltes aufweist, wobei das Brückungselement mit einem Außenumfang des Rohrabschnittes den Presssitz ermöglicht. Anschließend wird das Ende des Rohres in den Verbindungsabschnitt des Verbindungs- oder Abzweigelementes eingeschoben, wobei ein Presssitz zwischen dem Brückungselement des Verbindungsabschnittes und dem Rohrendabschnitt erzeugt wird. Anschließend werden radial trennbare Schalenteile des Laserkopfs um das Verbindungs- oder Abzweigelement angeordnet, die zumindest den Verbindungsabschnitt vollständig umschließen. Als nächstes erfolgt das Bestrahlen des Verbindungsabschnittes, vorzugsweise des Brückungselements, mit Laserstrahlen, die von in den Schalenteilen angeordneten Laserquellen ausgehen. Die Laserstrahlen sind dabei derart auf den Verbindungsabschnitt gerichtet, dass sie im Verbindungsbereich überlappen und das Brückungselement mit dem Außenumfang des Rohrendabschnittes unter radialem Anpressdruck verschweißt wird.

Nachfolgend wird die Erfindung anhand eines in Zeichnung dargestellten Ausführungsbeispiels näher erläutert. Weitere Merkmale der Erfindung ergeben sich aus der folgenden Beschreibung des Ausführungsbeispiels der Erfindung in Verbindung mit den Ansprüchen und der beigefügten Zeichnung. Es zeigen in einer schematischen Schnittdarstellung:
- Figur 1: einen erfindungsgemäßen teilbaren Laserkopf mit getrennten Halbschalen;
- Figur 2: den Laserkopf aus Figur 1 mit zusammengefügten Halb- schalen beim Schweißvorgang; und
- Figur 3: ein Verbindungselement mit Überbrückungselement zum Verbinden von zwei Rohrenden im Laserdurchstrahl- schweißverfahren;

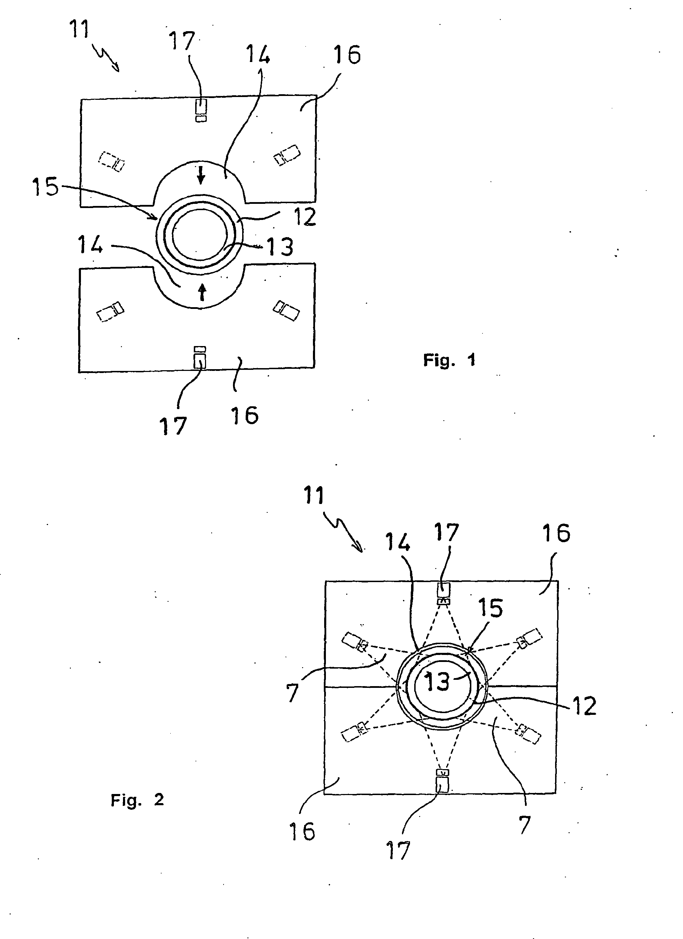

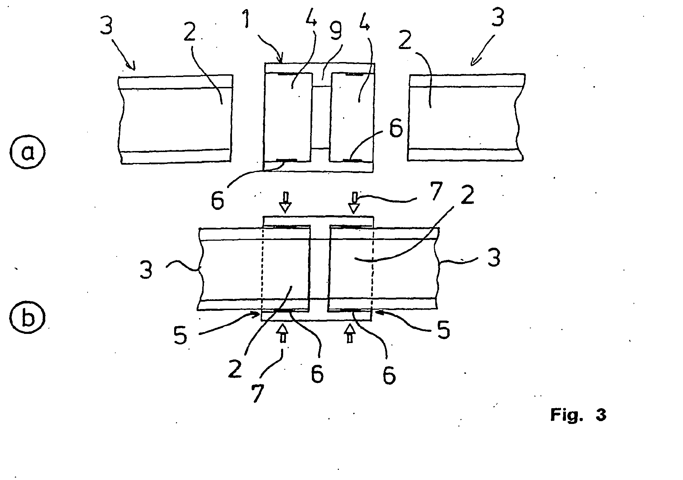

Die Figuren 1, 2 zeigen einen erfindungsgemäßen Laserkopf 11 zum Verbinden von rohrförmigen Teilen 12, 13 im Laserdurchstrahlverfahren. Mit dem Laserkopf 11 kann beispielsweise auch das in der Figur 3 dargestellte Verbindungselement 1 mit den Rohren 3 entlang dem Innenumfang dichtend verschweißt werden. Die Verschweißung der Teile 1, 3, bzw. 12, 13 erfolgt in einem zentralen Aufnahmeraum 14 des Laserkopfs 11, der einen Verbindungsbereich 15 der rohrförmigen Teile 12, 13 bzw. einen Verbindungsabschnitt 4 der Teile 1, 3 umschließt. Der Laserkopf 11 weist, wie aus der Figur 1 zu entnehmen ist, zwei radial voneinander trennbare Halbschalen 16 auf, so dass der Laserkopf 11, wie in Figur 2 dargestellt, um den Verbindungsabschnitt 4 der Teile 1, 3 oder um den Verbindungsbereich 15 der Teile 12, 13 herumgelegt werden kann.

In den Halbschalen 16 sind sechs Laserquellen 17 kreisförmig und gleichmäßig verteilt um den Aufnahmeraum 14 angeordnet. Die von den Laserquellen 17 ausgehenden Laserstrahlen 7 sind radial zu dem Aufnahmeraum 14 hingerichtet und überlappen sich bei in dem Aufnahmeraum 14 angeordneten zu verbindenden Teilen 1, 3, 12, 13 an dem Verbindungsabschnitt 4 oder dem Verbindungsbereich 15. Damit ist eine simultane Verschweißung der rohrförmigen Teile 1, 3 bzw. 12, 13 möglich.

Die Figur 3 zeigt beispielhaft für als zu verschweißende Teile ein im wesentlichen rohrförmiges Verbindungselement 1 zum Verbinden mit Rohrendabschnitten 2 eines aus thermoplastischen Kunststoff bestehenden Rohres 3 im Laserdurchstrahlschweißverfahren. Das Verbindungselement 1 weist an den Enden je einen hohlzylinderförmigen Verbindungsabschnitt 4 zur Aufnahme und zur dichtenden Befestigung des einschiebbaren Rohrendes auf. Der Rohrendabschnitt 2 bildet zusammen mit dem Verbindungsabschnitt 4 radial einen Ringspalt 5, wobei an dem Innenumfang des Verbindungsabschnittes ein angeformtes umlaufendes Brückungselement 6 in Form eines in radialer Richtung vorstehenden niedrigen Ringbundes zum partiellen Überbrücken des Ringspaltes 5 angeordnet ist.

Ein Innendurchmesser des Ringbundes 6 ist gegenüber einem Außendurchmesser des Rohrendabschnittes 2 geringfügig geringer ausgebildet, so dass zwischen dem Rohrendabschnitt 2 des Rohres 3 und dem Verbindungsabschnitt 4 des Verbindungselements 1 im Bereich des Ringbundes 6 ein Presssitz gebildet wird, sobald das Rohr 3 in das Verbindungselement 1 eingeschoben wird. Damit ist der Ringbund 6 mit dem Rohrendabschnitt 2 unter radialem Anpressdruck mittels Laserstrahlen 7 im Durchstrahlverfahren flüssigkeits- und gasdicht verschweißbar.

Die Figur 3a zeigt die Rohre 3 und das Verbindungselement 1 vor dem axialen Zusammenstecken, die Figur 3b im zusammengesteckten Zustand. Das Verbindungselement 1 weist mittig am Innenumfang eine Ringstufe 9 auf, die als Anschlag für die einzuschiebenden Rohre 3 dient. Die Rohrendabschnitte 2 der Rohre 3 müssen zur dichtenden Befestigung an dem Verbindungsabschnitt 4 des Verbindungselements 1 nicht stirnseitig mit der Ringstufe 9 verschweißt werden. Eine umlaufende Verschweißung entlang dem Brückungselement 6 ist ausreichend. Zum Verschweißen der Rohrendabschnitte 2 mit den Verbindungsabschnitten 4 im Laserdurchstrahlverfahren von außen, ist es notwendig, dass das Verbindungselement 1 aus einem für Laserlicht transparenten Kunststoffmaterial hergestellt ist. Das Laserlicht passiert in diesem Fall den Verbindungsabschnitt 4 im wesentlichen ungehindert.

Die Plastifizierung des mit dem Rohrendabschnitt 2 zu verschweißenden Brückungselementes 6 erfolgt im einfachsten Fall durch Erwärmen des Rohres 3 mittels Laserlicht. Dazu muss das Rohr 3 aus einem thermoplastischen Kunststoff bestehen, der für die Laserstrahlen 7 absorbierend ist. Zum Herstellen der Schweißverbindung wird der Rohrendabschnitt 2 im Bereich des Ringbundes 6 bis zum Aufschmelzen erhitzt, wobei die Schmelze den Ringbund 6 plastifiziert und sich mit diesem verbindet, so dass nach dem Erstarren der Schmelze eine stoffschlüssige Verbindung zwischen dem Rohr 3 und dem Verbindungselement 1 besteht.

Es ist auch möglich, für Laserlicht transparente Rohre 3 mit dem Verbindungselement 1 zu verschweißen. Dazu wird der Ringbund 6 als Laserlicht absorbierende Absorptionsschicht ausgebildet, die mit den Laserstrahlen 7 aufschmelzbar ist und den Rohrendabschnitt 2 im Bereich der Absorptionsschicht plastifiziert. Die Absorptionsschicht, die vorzugsweise stoffschlüssig mit dem Verbindungsabschnitt 4 verbunden ist, kann relativ dünn sein, d.h. etwa 0,1 bis 0,5 mm betragen. Sie kann beispielsweise in einem 2K-Spritzprozess hergestellt werden.

## Patentansprüche

1. Laserkopf (11) zum Verbinden von rohrförmigen Teilen (1, 3, 12, 13) im Laserdurchstrahlschweißverfahren, **dadurch gekennzeichnet, dass** der Laserkopf (11) mindestens zwei radial voneinander trennbare Schalenteile (16) aufweist, die einen Aufnahmeraum (14) für die zu verschweißenden Teile (1, 3, 12, 13) begrenzen, wobei in den Schalenteilen (16) eine Anzahl von Laserquellen (17) derart angeordnet ist, dass sich die von den Laserquellen (17) ausgehende Laserstrahlen (7) in dem Aufnahmeraum (14) überlappen und dass die Verschweißung der Teile (1, 3, 12, 13) in dem Aufnahmeraum (14) simultan erfolgt, wobei der Aufnahmeraum (14) beim Schweißvorgang einen Verbindungsabschnitt (4) bzw. einen Verbindungsbereich (15) der Teile (1, 3, 12, 13) umschließt.

2. Laserkopf nach Anspruch 1, **dadurch gekennzeichnet, dass** die Laserstrahlen (7) beim Schweißvorgang an dem Verbindungsabschnitt (4) bzw. an dem Verbindungsbereich (15) der zu verbindenden Teile (1, 3, 12, 13) überlappen.

3. Laserkopf nach Anspruch 1 oder 2, **dadurch gekennzeichnet, dass** die radial voneinander trennbare Schalenteile (16) zwei Halbschalen (16) sind.

4. Laserkopf nach einem der Ansprüche 1 bis 3, **dadurch gekennzeichnet, dass** die Schalenteile (16) die zu verbindenden Teile (1, 3, 12, 13) im Verbindungsbereich (15) radial pressen.

5. Laserkopf nach einem der vorangegangenen Ansprüche, **dadurch gekennzeichnet, dass** die Laserstrahlen (7) auf ein Brückungselement (6) gerichtet sind, das einen radialen Ringspalt (5) zwischen zwei sich axial überlappenden Endabschnitten der rohrförmigen Teile (1, 3, 12, 13) überbrückt.

6. Verfahren zum Verbinden eines Verbindungs- oder Abzweigelementes (1) mit einem Ende eines aus thermoplastischem Kunststoff bestehenden Rohres (3) nach der Laserdurchstrahlschweißmethode, wobei das Verbindungs- oder Abzweigelement (1) einen hohlzylindrischen Verbindungsabschnitt (4) zur Aufnahme und zur dichtenden Befestigung des einschiebbaren Rohrendabschnitten (2) aufweist, der zusammen mit dem Rohrendabschnitt (2) des eingeschobenen Rohres (3) radial einen Ringspalt (5) bildet und mittels einem Laserkopf (11) simultan verschweißt wird, mit
- Bereitstellen eines Rohres (3) mit einem Rohrendabschnitt (2),
- Bereitstellen eines Verbindungs- oder Abzweigelementes (1), dessen Verbindungsabschnitt (4) an dem Innenumfang ein angeformtes umlaufendes Brückungselement (6) zum partiellen Überbrücken des Ringspaltes (5) aufweist, wobei das Brückungselement (6) mit einem Außenumfang des Rohrendabschnittes (2) einen Presssitz ermöglicht,
- Einschieben des Rohrendabschnittes (2) des Rohres (3) in den Verbindungsabschnitt (4) des Verbindungs- oder Abzweigelementes (1), wobei ein Presssitz zwischen dem Brückungselement (6) des Verbindungsabschnitts (4) und dem Rohrendabschnitt (2) erzeugt wird,
- Anordnen radial trennbarer Schalenteile (16) des Laserkopfes (11) um das Verbindungs- oder Abzweigelement (1), die zumindest den Verbindungsabschnitt (4) vollständig umschließen,
- Bestrahlen des Verbindungsabschnittes (4), vorzugsweise des Brückungselements (6) mit Laserstrahlen (7), die von in den Schalenteilen (16) angeordneten Laserquellen (17) ausgehen und derart auf den Verbindungsabschnitt (4) gerichtet sind, dass sie im Verbindungsbereich (15) überlappen, und
- Verschweißen des Brückungselements (6) mit dem Außenumfang des Rohrendabschnittes (2) unter radialem Anpressdruck, der von dem Presssitz herrührt.

## Claims

1. Laser head (11) for joining tubular parts (1, 3, 12, 13) using the laser transmission welding method, **characterized in that** the laser head (11) has at least two shell parts (16) which can be radially separated from each other and define an accommodating space (14) for the parts (1, 3, 12, 13) to be welded, wherein a number of laser sources (17) are arranged in the shell parts (16) in such a manner that the laser beams (7) emerging from the laser sources (17) overlap in the accommodating space (14), and **in that** the welding of the parts (1, 3, 12, 13) is effected simultaneously in the accommodating space (14), wherein, during the welding operation, the accommodating space (14) surrounds a joining portion (4) or a joining region (15) of the parts (1, 3, 12, 13).

2. Laser head according to Claim 1, **characterized in that** during the welding operation, the laser beams (7) overlap at the joining portion (4) or at the joining region (15) of the parts (1, 3, 12, 13) to be joined.

3. Laser head according to Claim 1 or 2, **characterized in that** the shell parts (16) which can be radially separated from each other are two half shells (16).

4. Laser head according to one of Claims 1 to 3, **characterized in that** the shell parts (16) press the parts (1, 3, 12, 13) to be joined in the joining region (15), in a radial manner.

5. Laser head according to one of the preceding claims, **characterized in that** the laser beams (7) are directed onto a bridging element (6), which bridges a radial annular gap (5) between two axially overlapping end portions of the tubular parts (1, 3, 12, 13).

6. Method for joining a joining element or branching element (1) to one end of a thermoplastic plastics material pipe (3) according to the laser transmission welding method, wherein the joining element or branching element (1) has a hollow cylindrical joining portion (4) for accommodating and for sealingly securing the insertable pipe end portion (2), which together with the pipe end portion (2) of the inserted pipe (3) forms an annular gap (5) in a radial manner and is welded simultaneously by means of the laser head (11), said method including
- preparing a pipe (3) with a pipe end portion (2),
- preparing a joining element or branching element (1), the inner circumference of said joining portion (4) having an integrally moulded circumferential bridging element (6) for the partial bridging of the annular gap (5), wherein the bridging element (6) enables a press fit with an outer circumference of the pipe end portion (2),
- inserting the pipe end portion (2) of the pipe (3) into the joining portion (4) of the joining element or branching element (1), wherein a press fit between the bridging element (6) of the joining portion (4) and the pipe end portion (2) is created ,
- arranging radially separable shell parts (16) of the laser head (11) around the joining element or branching element (1), said shell parts surrounding at least the joining portion (4) in a complete manner,
- irradiating the joining portion (4), preferably the bridging element (6) by means of laser beams (7) which emerge from laser sources (17) arranged in the shell parts (16) and are directed in such a manner onto the joining portion (4) that they overlap in the joining region (15), and
- welding the bridging element (6) to the outer circumference of the pipe end portion (2) under radial contact pressure, which is produced by the press fit.

## Revendications

1. Tête laser (11) pour l'assemblage de pièces tubulaires (1, 3, 12, 13) par le procédé de soudage par transmission laser, **caractérisée en ce que** la tête laser (11) présente au moins deux pièces en coque (16) séparables l'une de l'autre radialement qui délimitent un espace de réception (14) pour les pièces à souder (1, 3, 12, 13), une pluralité de sources laser (17) étant disposées dans les pièces en coque (16) de façon que les faisceaux laser (7) provenant des sources laser (17) se chevauchent dans l'espace de réception (14) et que le soudage des pièces (1, 3, 12, 13) ait lieu simultanément dans l'espace de réception (14), l'espace de réception (14) entourant une section d'assemblage (4) ou une zone d'assemblage (15) des pièces (1, 3, 12, 13) lors du soudage.

2. Tête laser selon la revendication 1, **caractérisée en ce que** les faisceaux laser (7) se chevauchent sur la section d'assemblage (4) ou sur la zone d'assemblage (15) des pièces à assembler (1, 3, 12, 13) lors du soudage.

3. Tête laser selon la revendication 1 ou 2, **caractérisée en ce que** les pièces en coque (16) séparables l'une de l'autre radialement sont deux demi-coques (16).

4. Tête laser selon une des revendications 1 à 3, **caractérisée en ce que** les pièces en coque (16) compriment radialement les pièces à assembler (1, 3, 12, 13) dans la zone d'assemblage (15).

5. Tête laser selon une des revendications précédentes, **caractérisée en ce que** les faisceaux laser (7) sont dirigés sur un élément de pontage (6) qui ponte une fente annulaire radiale (5) entre deux sections d'extrémité se chevauchant axialement des pièces tubulaires (1, 3, 12, 13).

6. Procédé d'assemblage d'un élément de liaison ou de dérivation (1) avec une extrémité d'un tube (3) en matière thermoplastique par la méthode du soudage par transmission laser, l'élément de liaison ou de dérivation (1) présentant une section d'assemblage (4) pour la réception et la fixation étanche de la section d'extrémité de tube (2) pouvant y être insérée, qui forme radialement une fente annulaire (5) avec la section d'extrémité de tube (2) du tube (3) inséré et est soudée simultanément au moyen d'une tête laser (11), comprenant
- mise à disposition d'un tube (3) possédant une section d'extrémité de tube (2),
- mise à disposition d'un élément de liaison ou de dérivation (1) dont la section d'assemblage (4) présente sur le périmètre intérieur un élément de pontage (6) périphérique formé dessus, destiné à chevaucher partiellement la fente annulaire (5), l'élément de pontage (6) permettant un ajustement serré avec un périmètre extérieur de la section d'extrémité de tube (2),
- insertion de la section d'extrémité de tube (2) du tube (3) dans la section d'assemblage (4) de l'élément de liaison ou de dérivation (1), un ajustement serré entre l'élément de pontage (6) de la section d'assemblage (4) et la section d'extrémité de tube (2) étant créé,
- disposition de pièces en coque (16) séparables radialement de la tête laser (11) autour de l'élément de liaison ou de dérivation (1), qui entourent entièrement au moins la section d'assemblage (4),
- exposition de la section d'assemblage (4), de préférence de l'élément de pontage (6), à des faisceaux laser (7) qui proviennent de sources laser (17) disposées dans les pièces en coque (16) et qui sont dirigés sur la section d'assemblage (4) de façon à se chevaucher dans la zone d'assemblage (15), et
- soudage de l'élément de pontage (6) avec le périmètre extérieur de la section d'extrémité de tube (2) sous une pression d'application radiale provenant de l'ajustement serré.
